# EUROPEAN PATENT APPLICATION

(11) **EP 1 239 688 A1**
(43) Date of publication of application: **11.09.2002**
(21) Application number: 01105794.0
(22) Date of filing: 08.03.2001
(51) Int. Cl.: H04Q 7/34

(54) **Mobile telecommunication means comprising means for detecting and reporting errors**

(71) Applicant: Sony International (Europe) GmbH, 10785 Berlin (DE)
(72) Inventor: Matsuzaki, Yoshihiro, Sony Int. (Europe) GmbH, 85609 Aschheim (DE)
(74) Representative: Körber, Martin, Dipl.-Phys.

(57) **Abstract**

The present invention relates to a mobile telecommunication means (1) for a wireless communication system, comprising an error detecting means (2) for detecting errors, which occur during the operation of the mobile telecommunication means, and an error transmitting means (3) for transmitting information about the detected errors to a predetermined receiver by means of a data bearer service of the wireless telecommunication system.

## Description

The present invention relates to a mobile telecommunication means for a wireless communication system, comprising means for detecting and reporting errors.

Mobile telecommunication means, like mobile telephones for the GSM-system (Global System for Mobile Telecommunication) and the UMTS-system (Universal Mobile Telephone System), are used in various locations, anytime all over the world. They are also used under different and varying conditions, e.g. different transmitting/receiving conditions, and with a huge number of different network operators.

Due to this huge plurality of different operating conditions, under which mobile telephones are operated, it is quite difficult for developers of mobile telephones, to already consider any possible condition of operating during the development and the manufacture of a mobile telephone. Therefore, it is difficult to foresee and to fix errors, which might occur during the operation of mobile telephones.

In the prior art, the developers of mobile telephones are depended on the report of the users to locate errors. However, these oral or written reports of users are usually insufficient, since they often cannot give details, for example about the conditions, in which the mobile telephone has been operated and in which an error has occurred.

Thus, it is often quite difficult to reproduce for example the environment and the problem, which led to the error, on the basis of the report of the user, in order to be able to repair the mobile telephone or to generally amend the operating software of a certain type of mobile telephones showing a certain error under certain operating conditions.

It is therefore the object of the present invention, to provide a mobile telecommunication means for a wireless telecommunication system, which allows a simple and effective way for analysing and fixing errors, which occur during the operation of the mobile telecommunication means.

This object is achieved by a mobile telecommunication means for a wireless telecommunication system according to claim 1.

According to the present invention, the mobile telecommunication means comprises an error detecting means for detecting errors, which occur during the operation of the mobile telecommunication means. The mobile telecommunication means further comprises an error transmitting means for transmitting information about the detected error to a predetermined receiver via the respective wireless telecommunication system over which the information about the occurred errors is transmitted. The information can e.g. be transmitted in the GMS-, GPRS (General Packet Radio Service)- or UMTS-system.

According to the present invention, the error detecting means detects one or more errors, which occur during the operation of the mobile telecommunication means, for example during a login into the network or during a telephone call. After detecting the error, the error transmitting means establishes a connection to a predetermined receiver, for example to a database in a server of the manufacturer of the mobile telecommunication means, and sends information about the occurred errors to this receiver.

The present invention has the advantage, that the developers of the mobile telecommunication means do not have to rely upon the reports of customers, which report, often insufficient, about occurred errors. Further, the transmitted information may further comprise information about the operating conditions of the mobile telecommunication means, when the error occurred.

The information about the occurred errors is permanently or temporarily stored in a storing means, i.e. in a non-volatile memory (NVM) of the mobile communication means. Hereby, the information stays available, for example even when the mobile telecommunication means is powered off interimly before the information is transmitted to the network.

Advantageously, the mobile telecommunication means according to the present invention comprises a tracing means for storing a plurality (for example several hundred) of the last executed steps of the mobile telecommunication means in the storing means. The stored steps contain e.g. information about connection establishment, network operator, log in to and log out from the network, etc. This additional information completes the error information to ease the detecting and fixing of errors by the manufacturer or the provider of the mobile telecommunication means.

The transmitting of information about the occurred errors can be stimulated automatically by the error transmitting means. Thereby, the error transmitting means establishes automatically the connection to the predetermined receiver and sends automatically the information to this receiver upon the occurrence and the detection of an error.

This has the advantage, that the user of the mobile telecommunication means is not annoyed with transmitting the information. Hereby, the process of transmitting the information can happen secretly, so that the transmitting is not recognised by the user.

Advantageously, the transmitting of the information is carried out upon the occurrence of a predetermined event, e.g. in the context of or shortly after login to the network, i.e. shortly after switching on the mobile telecommunication means. Further, the transmission could be carried out during battery recharging and/or in the context of or shortly before shutdown the mobile telecommunication means (after operating the switch-off button), which leads to a logout from the network.

The transmitting of the information about the detected errors can also be stimulated manually by the user of the mobile telecommunication means.

To protect the receiver from an unauthorised access, the error transmitting means may send an authorisation, e.g. comprises a predetermined authorisation and security information, to the receiver before transmitting the information about the detected errors.

The predetermined receiver, where all the information about errors are sent to (e.g. the database of a manufacturer), is e.g. identified by an address of the respective service. In case of a packet-oriented network (like GPRS), every transmitted data packet has a packet address for transmitting the respectively data packet to the correct receiver.

The predetermined receiver can also be a call site of the manufacturer, which is dialed with a predetermined telephone number to transmit the information.

In the following description, a preferred embodiment of the present invention is explained in more detail in relation to the enclosed drawings, in which
figure 1 shows the principle of error transmitting according to the present invention, and
figure 2 shows a block diagram of a mobile telecommunication means according to the present invention.

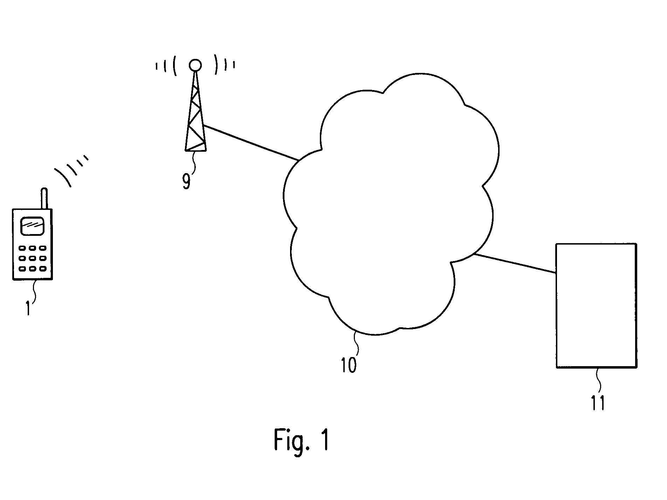

On the basis of figure 1, the principle of transmitting errors according to the present invention is described below.

Figure 1 shows a mobile telecommunication means 1 (further called mobile telephone 1) according to the present invention, a base station 9 of a wireless telecommunication system, a telecommunication network 10 and a receiver 11 for receiving the transmitted error information.

In case that the mobile telephone 1 detects errors during operation, the mobile telephone 1 automatically generates error information, which is/are useful to debug the occurred problem.

The generated error information could e.g. comprise information about the operation conditions, e.g. the network operator, location area, cell ID, time, exit code, which identify a trigger of the system reset, values of registers, last executed steps, IMEI (international mobile equipment identity), hardware version, software version, etc.

For transmitting the error information to the predetermined receiver 11, the mobile telephone 1 first establishes a connection for transmitting data to a base station 9 of the wireless communication system. When the connection is established, the error information is transmitted by means of a telecommunication network 10 to the receiver 11.

The receiver 11 is predetermined e.g. by the manufacturer of the mobile telephone 1. This may be a data base, to be accessed through a free call site or another address in a network.

A transmission of the error information might be stimulated either automatically by the mobile telephone 1 by means of the error transmitting means or manually by the user of the mobile telephone 1 as described above.

The error information is transmitted via a respective service, e.g. a data bearer service or the like which is provided by the respectively wireless communication system, e.g. via GSM (Global System for Mobile Telecommunication), GPRS (General Packet Radio Service) or UMTS (Universal Mobile Telephone Service).

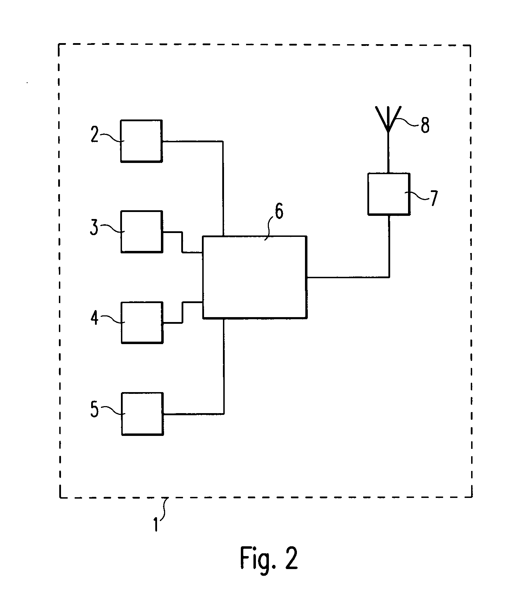

As shown in figure 2, the mobile telephone 1 comprises an error detecting means 2, an error transmitting means 3, a storing means 4, and a tracing means 5 for carrying out the present invention. The mobile telephone also comprises a processing means 6 for controlling and processing the operation of the mobile telephone 1 and an antenna 8 connected with a transceiving means 7 for communicating with other mobile telecommunication means and/or base stations of the wireless telecommunication system over an air-interface.

The means, which are further necessary for the operation of the mobile telephone 1, like input means, output means, signal processing means, display means, etc. are also comprised but not shown, for the sake of clarity.

The error detecting means 2 automatically detects errors, which occur during the operation of the mobile telephone 1. When errors are detected, information about the occurred errors is stored in the storing means 4. The error information contains e.g. information of an exit or error code, time, network operator, etc. Further in order to ease the locating of errors, the information about the last executed steps by the mobile telephone 1, e.g. last several hundred steps like login, logout, establishing connections, protocols, are recognised and stored in the storing means 4 by the tracing means 5 to complete the error information.

Thereby, error information in the sense of the present invention is information, which is useful to locate (debug) and remove errors, e.g. error information detected by the error detecting means and, if necessary, the last executed steps stored by the tracing means 5.

The error information, that is generated by this means, is transmitted to the receiver by the error transmitting means 3 via the wireless communication link as described above.

## Claims

1. Mobile telecommunication means (1) for a wireless communication system, comprising
an error detecting means (2) for detecting errors, which occur during the operation of the mobile telecommunication means (1), and
an error transmitting means (3) for transmitting information about the detected errors to a predetermined receiver (11) by means of the wireless telecommunication system.

2. Mobile telecommunication means (1) according to claim 1,
**characterized by**
a storing means (4) for storing information about the detected errors.

3. Mobile telecommunication (1) means according to claim 2,
**characterized by**
a tracing means (5) for storing a plurality of the last executed steps of the mobile telecommunication means (1) in the storing means (4).

4. Mobile telecommunication means (1) according to claim 1, 2 or 3,
**characterized in,**
**that** the transmitting of information about the detected errors is automatically stimulated.

5. Mobile telecommunication means (1) according to claim 4,
**characterized in,**
**that** the transmitting of information about the detected errors is automatically stimulated after switching the power on of the mobile telecommunication means (1) in the context of a login to a network.

6. Mobile telecommunication means (1) according to claim 4 or 5,
**characterized in,**
**that** the transmitting of information about the detected errors is automatically stimulated before switching the power off of the mobile telecommunication means (1) in the context of an logoff from a network.

7. Mobile telecommunication means (1) according to claim 4, 5 or 6,
**characterized in,**
**that** the transmitting of information about the detected errors is automatically stimulated during battery recharging of the mobile telecommunication means (1).

8. Mobile telecommunication means (1) according to one of the claims 1 to 7,
**characterized in,**
**that** the transmitting of information about the detected errors is manually stimulated by a user.

9. Mobile telecommunication means (1) according to one of the claims 1 to 8,
**characterized in,**
**that** the error transmitting means (3) sends an authorisation to get access to the predetermine receiver (11).

10. Mobile telecommunication means (1) according to one of the claims 1 to 9,
**characterized in,**
**that** the predetermined receiver (11) is identified by an address in a network of the data bearer service.

11. Mobile telecommunication means (1) according to one of the claims 1 to 10,
**characterized in,**
**that** the predetermined receiver (11) is identified by a predetermined phone number.
